# EUROPEAN PATENT SPECIFICATION

(11) **EP 0 360 401 B1**
(45) Date of publication and mention of the grant of the patent: **19.10.1994**
(21) Application number: 89308049.9
(22) Date of filing: 08.08.1989
(51) Int. Cl.: H04N 1/40

(54) **Method and apparatus for converting gray scale in a digital data display device**
Verfahren und Vorrichtung zur Grauwertübersetzung in einem digitalen Datenaufzeichnungsgerät
Procédé et appareil pour la conversion d'une échelle de gris dans un dispositif numérique d'affichage de données

(30) Priority: 22.09.1988 JP 236290/88
(43) Date of publication of application: 28.03.1990
(73) Proprietor: International Business Machines Corporation, Armonk, N.Y. 10504 (US)
(72) Inventor: Sekiya, Kazuo Sunheim Asami 302, Tokyo-to (JP); Shiraishi, Yuichi, Yamato-shii Kanagawa-ken (JP)
(74) Representative: Burt, Roger James, Dr.

(56) References cited:
- EP-A- 0 163 903
- EP-A- 0 310 021
- FR-A- 2 514 531

## Description

### Field of the Invention

This invention relates to digital data display system and partially to a method and an apparatus for converting any M gray levels in a K-gray scale (halftone) to M gray levels in an N-gray scale (where K>N≧M).

More particularly, it is related to a method and an apparatus wherein, in order to allow the display output data to a CRT capable of displaying with a K (for example, 64)-gray scale in a personal computer or the like to also be displayed on a plasma display capable of displaying an N (for example, 16)-gray scale, when selected M (for example, 14) gray levels in the K-gray scale are given; those M gray levels are converted to the N-gray scale so as to be mutually identifiable.

### Prior Art

It is known that a dot matrix display having a multi-level gray scale is displayed in a halftone representation using a dithering technique in order to display it with another multi-level gray scale, but this is that one-dot gray scale is converted to a multi-dot halftone and it cannot be applied to a one-dot to one-dot conversion.

Some personal computers can display a multi-level gray scale representation on a CRT, but they do not convert that gray scale representation to another type of multi-level gray scale representation. Also, the display output from a personal computer to a printer is a two-level gray scale output, white and black, so a gray scale conversion from a multi-level gray scale to some other multi-level gray scale is not provided.

### Problem to be Solved by the Invention

It is the objective of this invention that, when each of the M gray levels represented by a K-gray scale is converted to one by an N-gray scale, said conversion is made without causing the degeneration of the gray levels and in accordance with the sequence and magnitude of the relative brightness.

### Means for Solving the Problem

The present invention is set out in th claims.

### Advantage of the Invention

If the condition K>N≧M is satisfied, any M gray levels in a K-gray scale can easily be converted to ones in an N-gray scale on a one-to-one basis, and in addition the gray scale conversion is obtained in which the relative order and magnitude of the brightness of those M gray levels are maintained.

### Embodiment

In order that the invention may be fully understood a preferred embodiment thereof will now be described with reference to the accompanying drawings in which:
Fig. 1 is a block diagram representing the construction of the display output of a personal computer incorporating the gray scale converter according to this invention;
Fig. 2 is a schematic representation of the conversion table in the above described gray scale converter;
Figs. 3a - 3e are schematic representations showing the operational stages of the processing table in the above described gray scale converter; and
Figs. 4a - 4e are flow charts showing the algorithm used in creating the above described conversion table.

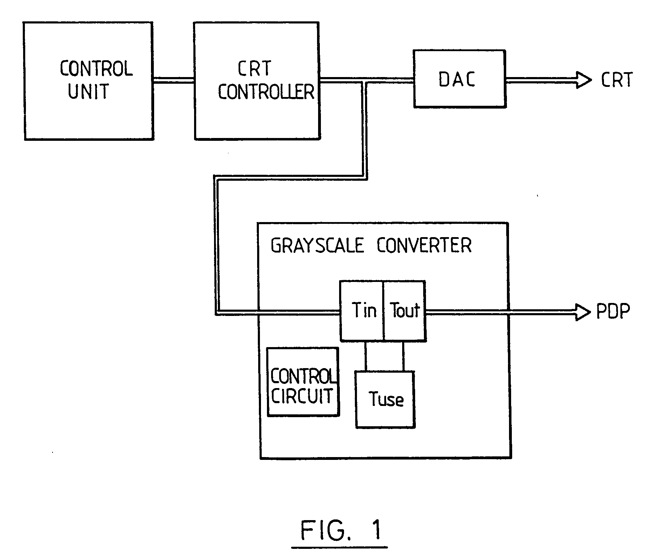

Fig. 1 shows an application example of the gray scale conversion apparatus of this invention. Data outputted from the control unit of a personal computer or the like is converted by a CRT controller to a display data for a CRT display which is capable of displaying 640 x 400 dots. This display data specifies a gray level in 64-gray scale with 6 bits with respect to each of 640 x 400 dots. These data are converted to analogue data by a digital-to-analogue converter (DAC) and outputted to a CRT, on which they are displayed in the 64-gray scale.

This invention enables the display data from a CRT controller to be displayed, for instance, on a plasma display panel (PDP). At present, a conventional PDP can display each dot in a 16-gray scale, so it cannot directly display in a 64-gray scale the data outputted from a CRT controller. Thus, it is necessary to convert it to the 16-gray scale.

Although the CRT can display in the 64-gray scale, the CRT controller can use only 16 gray levels in the 64-gray scale at most. Therefore, if M (M≦16) gray levels in the 64 gray scale outputted from the CRT controller are converted to ones in the 16-gray scale representation, they can be displayed on the PDP.

However, if the 64-gray scale representation are converted to 16-gray scale representation on a proportional distribution basis, for example, if they are converted to the 16-gray scale representation by extracting the upper 4 bits of the 64-gray scale representation expressed by 6 bits (hereinafter such a conversion is referred to as a "natural conversion"), the degeneration of gray levels can occur in which some gray levels different each other in the 64-gray scale representation are represented as the same gray level in the 16-gray scale representation. Such degeneration of gray levels is not preferred because the gray levels originally identifiable become unidentifiable.

This invention overcomes the above drawback by carrying out a gray scale conversion satisfying the following three conditions.
(1) The M gray levels in the K-gray scale, when converted to ones in the N-gray scale, must correspond to the M gray levels in the N-gray scale on a one-to-one basis. That is, the M gray levels must be identifiable also in the N-gray scale.
(2) The M gray levels in the K-gray scale, when converted to ones in the N-gray scale, must maintain the relation of the magnitude of the brightness in the N-gray scale.
(3) The relative brightness of dots in the K-gray scale must be also kept in the N-gray scale. However, if it is in conflict with the conditions (1) and (2), an optimum gray level in the N-gray scale is to be selected.

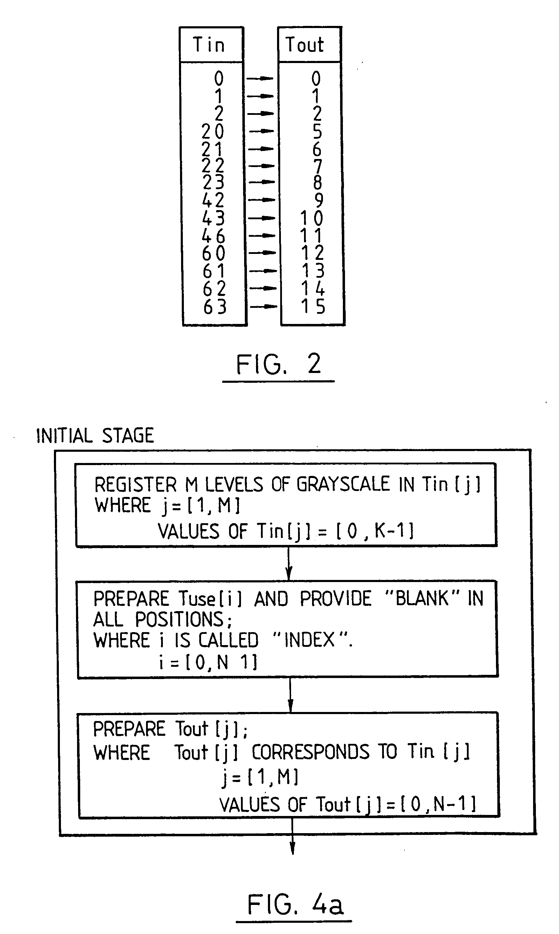

A gray scale conversion apparatus in which this invention was incorporated includes a control circuit for creating a conversion table as shown in Fig. 2. This conversion apparatus comprises a table Tin for representing any selected M gray levels in the K-gray scale and a table Tout for representing gray levels in the N-gray scale corresponding to those M gray levels, and it is apparent that any of the M gray levels in the K-gray scale can be converted to one in the N-gray scale by using these tables.

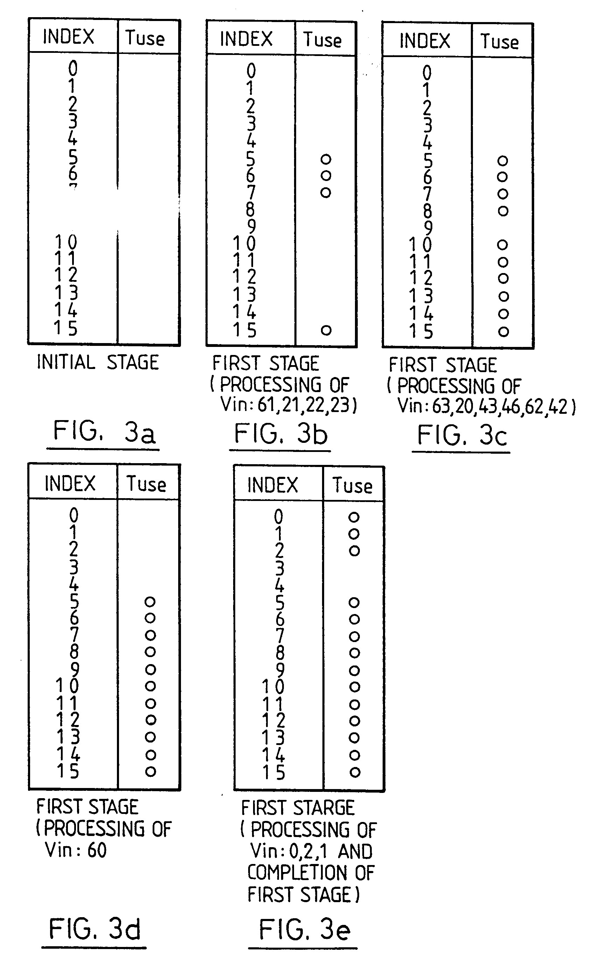

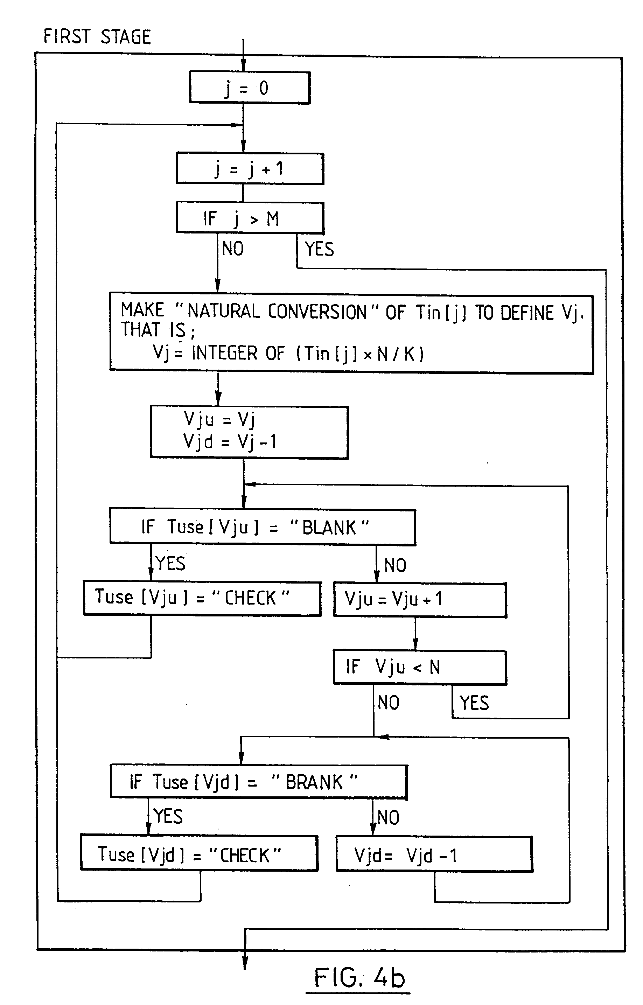

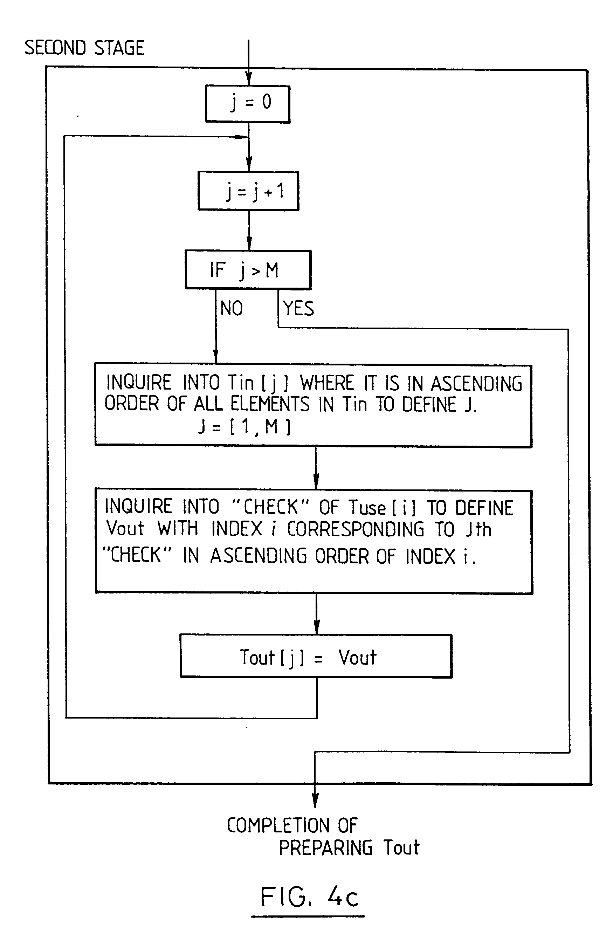

The algorithm for making such a conversion table will be described with reference to the processing tables shown in Figs. 3a - 3e and the flow charts shown in Figs. 4a - 4c.

### (a) Initialisation stage

The input representing any M gray levels in the K-gray scale is Vin, and the output representing the gray level in the N-gray scale corresponding to the Vin is Vout. In this example, it is assumed that K = 64, N = 16 and M = 14. In this case, the Vin is an integer in the range of [0,63] and the Vout is an integer in the range of [0,15], and zero means one having the lowest brightness or black.

Step 1: In the table Tin, M gray levels in the K-gray scale selected as the Vin, that is, 0, 1, 2, 20, 21, 22, 23, 42, 43, 46, 60, 61, 62 and 63 are entered.

Step 2: A processing table Tuse as shown in Fig. 3a is prepared and filled with blanks. The individual positions in the processing table Tuse are indexed by digits from 0 to 15.

Step 3: The contents of the table Tout is made blank at first, but the contents will be filled in and completed in the second step, as described later.

### (b) First stage

This stage is that the relation of the relative magnitude of the brightness for the M gray levels to be outputted in the N-gray scale are entered in the table Tuse with a check or "o", completing the table Tuse.

Step 1: Select one out of the respective elements entered in the table Tin on which the processes of the following steps 2 - 4 have not been performed, and carry out the steps 2 - 4 for the selected element. When all elements in the Tin have been processed, the second stage is taken.

Step 2: Make the "natural conversion" of Vin for the element selected in the step 1, and define it as value Vj. Vju = Vj is assumed to be the initial value.

Step 3: Examine the contents of a position in the table Tuse whose index is Vju, and if it is blank, enter a check "o" and go to step 1. If a check has already been entered in that position, assume that Vju = Vju + 1. In that case, if Vju<N, repeat step 3. If Vju≧N, go to step 4 with an initial value of Vjd = Vj - 1.

Step 4: Examine the contents of a position in the table Tuse whose index is Vjd, and if it is blank, enter a check ( o ) and go to step 1. If a check has already been entered in that position, assume that Vjd = Vjd - 1 and repeat step 4. Because of M≦N, the condition of Vjd<0 never occurs.

When the first stage is completed, checks have been entered into the table Tuse in the positions corresponding to the M indices.

### (c) Second stage

This stage is that in which the table Tout in Fig. 2 is completed by selecting the positions in the table Tuse which have a check entered and correspond to the respective elements in the table Tin, and entering the indices corresponding to the positions into the table Tout.

Step 1: Select from the table Tin an element on which the processes of the second stage have not been performed, and execute the following steps 2 - 4. The second stage will be completed with the completion of the processes of the following steps 2 - 4 on all the elements in the Tin.

Step 2: Determine where the value Vin of the element selected in step 1 is in ascending order of all the elements of the table Tin, and define it as value J. J takes a value in the range of [1, M].

Step 3: Assume as Vout is the J-th smallest index of the indices for which the checks have been entered in the table Tuse.

Step 4: Enter the Vout obtained in the step 3 in a position of the table Tout corresponding to the Vin, and go to the step 1.

In this second stage, the elements of the tables Tin and Tuse are counted up from the smallest one, but the same result is obtained even if they are counted down from the largest one.

The conversion table of Fig. 2 can be created as described above. Using this conversion table, the signal Vin representing one of the selected M gray levels in the K-gray scale can be converted to the signal Vout representing a gray level in the N-gray scale.

Further, in the above described first stage, when the checks have been entered in the table Vuse, they are examined in the ascending order using Vju as the initial value and, at the time when N - 1 is reached, then the checks are examined in the descending order using Vjd as the initial value. However, even if, to the contrary, the checks are first examined in the descending order using Vju as the initial value and are examined in the ascending order using Vjd = Vj + 1 as the initial value when zero is reached, it is apparent that a similar result is obtained.

Also, it is easy to implement the gray scale converter practising this invention by means of software according to the above described algorithm, and it is also apparent that this algorithm can be implemented by a logical circuit.

## Claims

1. A method for converting first image signals, indicative of selected M gray levels in a K-gray scale, to second image signals, indicative of M levels in an N-gray scale, where *K > N ≧ M*, such that the second image signals in the gray scale represent the relative order and magnitude of the brightnesses of the M gray levels in the K-gray scale to accommodate the output of the second image signals on an N-gray scale display device in response to the input of the first image signals , comprising the steps of
· creating a first table by mapping selected M gray levels, each represented by first image signals of x bits, in accordance with the relative order and magnitude of their brightnesses in a K-gray scale, into different M gray levels, each represented by y bits indicative of indexed positions in an N-gray scale, where *K > N ≧ M* and x > y;
wherein this step comprises:
- providing a set of positions with indexes to be used for said first table selecting said M gray levels in the K-gray scale one at a time;
- performing a "natural conversion" on the x bits, by subtracting the upper y bits, of the first gray level selected for obtaining its gray scale value Vj in the N-gray scale;
- entering a check in the position in said first table of an index Vju, using Vju=Vj as the initial value in said first table, if no check has been entered in said position, letting Vju=Vju+1 if a check has been entered in said position, and if said latter index Vju<N, entering a check in the position of said latter index Vju, and if *Vju* ≧ *N*, entering a check in the position of an index Vjd, using Vjd=Vj-1 as the initial value, if no check has been entered in said Vjd position. and if a check has been entered in said Vjd position, letting Vjd=Vjd-1, and entering a check in the position of said latter index Vjd; and
- performing a "natural conversion" on the x bits of each of the other M gray levels as selected, for obtaining their gray scale values in the N-gray scale and entering checks in the positions in said first table according to the indexes determined in the above steps;
· creating a second table by mapping said different M gray levels, in the gray scale mapped in said first table. correspondingly to the M gray levels in said K-gray scale and storing said second table:
· inputting first image signals to said stored second table;
· using said second table to convert an input x bit first image signal indicative of an M gray level in said K-gray scale to an output y bit second image signal indicative of the corresponding M gray level in said N-gray scale; and
· supplying second image signals output by said second table for output on said N-gray scale display device.

2. A method as claimed in claim 1, wherein the step of creating said second table comprises:
· selecting said M gray levels in the K-gray scale one at a time;
· determining where the value Vin of the selected gray level is in the ascending order of M gray level values in the K-gray scale, and determining its ranking J;
· designating the J-th smallest index of the indices of the positions with checks entered in said first table, as Vout; and
· entering said Vout into a position in said second table corresponding to said Vin value.

3. A method as in claim 2, wherein the step of using said second table comprises:
· comparing the value of a first input signal with the Vin values in said second table and converting a matching x bit Vin signal, representing the M gray level in the K-gray scale, to the matching y bit Vout signal in said second table, representing the M gray level in the N-gray scale.

4. A method as in claim 3 further comprising the steps of
· supplying said x bit Vin signals, representing said M gray levels in the K-gray scale, to a display device capable of displaying K-gray scale images while supplying said y bit Vout signals to a display device capable of displaying N-gray scale images.

5. Digital display apparatus for converting first image signals, indicative of selected M gray levels in a K-gray scale, to second image signals, indicative of M levels in an N-gray scale, where *K* > *N* ≧ *M*, such that the second image signals in the gray scale represent the relative order and magnitude of the brightnesses of the M gray levels in the K-gray scale to accommodate the output of the second image signals on an N-gray scale display device in response to the input of the first image signals , comprising:
· means for creating a first table by mapping selected M gray levels, each represented by first image signals of x bits, in accordance with the relative order and magnitude of their brightnesses in a K-gray scale, into different M gray levels, each represented by y bits indicative of indexed positions in an N-gray scale, where *K* > *N* ≧ *M* and x>y;
wherein these means comprise:
- memory means, having a set of positions with indexes, for receiving values to be entered in said first table means for selecting said M gray levels in the K-gray scale one at a time;
- means for performing a "natural conversion" on the x bits, by subtracting the upper y bits, of the first gray level selected for obtaining its gray scale value Vj in the N-gray scale;
- means for entering a check in the position in said first table of an index Vju, using Vju=Vj as the initial value in said first table, if no check has been entered in said position,
- means, if a check has been entered in said position, letting Vju =Vju+1, and if said latter index Vju<N, for entering a check in the position of said latter index V*ju*,
- means, if said latter index V*ju* ≧ *N*, for entering a check in the position of an index Vjd, using Vjd =Vj-1 as the initial value, if no check has been entered in said Vjd position,
- and means if a check has been entered in said Vjd position, for letting Vjd=Vjd-1 and entering a check in the position of said latter index Vjd; and
- means for actuating said foregoing means to perform a "natural conversion" on the x bits of each of the other M gray levels as selected, for obtaining their gray scale values in the N-gray scale, and, to enter checks in the positions in said first table according to the indexes as determined by the foregoing means;
· means for creating a second table by mapping said different M gray levels, in the gray scale mapped in said first table, correspondingly to the M gray levels in said K-gray scale and storing said second table;
· means for inputting first image signals to said stored second table;
· means for using said second table to convert an input x bit first image signal indicative of an M gray level in said K-gray scale to an output y bit second image signal indicative of the corresponding M gray level in said N-gray scale; and
· means for supplying second image signals output by said second table for output on said N-gray scale display device.

6. An apparatus as claimed in claim 5, wherein the means for creating said second table comprises:
· means for selecting said M gray levels in the K-gray scale one at a time;
· means for determining where the value Vin of the selected gray level is in the ascending order of M gray level values in the K-gray scale, and for determining its ranking J;
· means for designating the J-th smallest index of the indices of the positions with checks entered in said first table, as Vout; and
· means for entering said Vout into a position in said second table corresponding to said Vin value.

7. An apparatus as claimed in claim 6, wherein the means for using said second table comprises:
· means for comparing the value of a first input signal with the Vin values in said second table and converting a matching x bit Vin signal, representing the M gray level in the K-gray scale, to the matching y bit Vout signal in said second table, representing the M gray level in the N-gray scale.

8. An apparatus as claimed in claim 7, further comprising means for supplying said x bit Vin signals, representing said M gray levels in the K-gray scale, to a display device capable of displaying K-gray scale images while supplying said y bit Vout signals to a display device capable of displaying N-gray scale images.

## Patentansprüche

1. Ein Verfahren zur Übersetzung erster Bildsignale, die für ausgewählte M Graustufen auf einer K-Graustufen-Skala stehen, in zweite Bildsignale, die für M Stufen auf einer N-Graustufen-Skala stehen, wobei K > N ≧ M ist, so daß die zweiten Bildsignale in der Graustufenskala die relative Reihenfolge und Größe der Helligkeit der M Graustufen auf der K-Graustufen-Skala repräsentieren, um die Ausgabe der zweiten Bildsignale auf einem N-Graustufen-Anzeigegerät als Reaktion auf die Eingabe der ersten Bildsignale anzupassen, bestehend aus folgenden Schritten:
■ Erstellen einer ersten Tabelle durch Zuordnen ausgewählter M Graustufen, jeweils repräsentiert durch erste Bildsignale mit x Bits, gemäß der relativen Reihenfolge und Größe ihrer Helligkeit auf einer K-Graustufen-Skala in andere M Graustufen, jeweils repräsentiert durch y Bits, die für indizierte Positionen auf einer N-Graustufen-Skala stehen, wobei K > N ≧ M und x > y ist; wobei dieser Schritt umfaßt:
- Bereitstellung einer Gruppe von Positionen mit Indizes, die dazu dient, daß die erste Tabelle jeweils einzeln die M Graustufen auf der K-Graustufen-Skala auswählt;
- Durchführen einer "natürlichen Übersetzung" mit den x Bits durch Subtraktion der oberen y Bits der ersten ausgewählten Graustufe, um deren Graustufenwert Vj auf der N-Graustufen-Skala zu erhalten;
- Eintragen einer Markierung an der Position eines Index Vju in der ersten Tabelle unter Verwendung von Vju = Vj als Anfangswert in der ersten Tabelle, wenn keine Markierung an dieser Position eingetragen wurde, Setzen von Vju = Vju + 1, wenn eine Markierung an dieser Position eingetragen wurde, und wenn der letztere Index Vju < N ist, Eintragen einer Markierung an der Position des letzteren Index Vju, und wenn Vju ≧ N ist, Eintragen einer Markierung an der Position eines Index Vjd unter Verwendung von Vjd = Vj - 1 als Anfangswert, wenn keine Markierung an der Position Vjd eingetragen wurde, und wenn eine Markierung an der Position Vjd eingetragen wurde, Setzen von Vjd = Vjd - 1, und Eintragen einer Markierung an der Position des letzteren Index Vjd; und
- Durchführen einer "natürlichen Übersetzung" mit den x Bits jeder der anderen M Graustufen wie ausgewählt, um deren Graustufenwerte in der N-Graustufen-Skala zu erhalten, und Eintragen von Markierungen an den Positionen in der ersten Tabelle gemäß den Indizes, die in den obigen Schritten ermittelt wurden;
■ Erstellen einer zweiten Tabelle durch entsprechendes Zuordnen der verschiedenen M Graustufen auf der in der ersten Tabelle zugeordneten Graustufenskala zu den M Graustufen auf der K-Graustufen-Skala und Speichern der zweiten Tabelle;
■ Eingeben erster Bildsignale in die gespeicherte zweite Tabelle;
■ Nutzen der zweiten Tabelle zur Übersetzung eines ersten Eingabe-Bildsignals mit x Bits, das für eine M-Graustufe auf der K-Graustufen-Skala steht, in ein zweites Ausgabe-Bildsignal mit y Bits, das für die entsprechende M-Graustufe auf der N-Graustufen-Skala steht; und
■ Liefern zweiter Bildsignale, die von der zweiten Tabelle ausgegeben werden, zur Ausgabe auf dem N-Graustufen-Anzeigegerät.

2. Ein Verfahren nach Anspruch 1, bei dem der Schritt des Erstellens der zweiten Tabelle umfaßt:
■ Auswählen jeweils einer der M Graustufen auf der K-Graustufen-Skala;
■ Feststellen, wo sich der Wert Vein der ausgewählten Graustufe in der aufsteigenden Reihenfolge der M Graustufenwerte auf der K-Graustufen-Skala befindet, und Feststellen seines Ranges J;
■ Bezeichnen des J-kleinsten Index der Indizes der Positionen mit Markierungen, die in die erste Tabelle eingetragen sind, als Vaus; und
■ Eintragen von Vaus in eine Position in der zweiten Tabelle entsprechend dem Vein-Wert.

3. Ein Verfahren nach Anspruch 2, bei dem der Schritt des Nutzens der zweiten Tabelle umfaßt:
■ Vergleichen des Wertes eines ersten Eingabesignals mit den Vein-Werten in der zweiten Tabelle und Übersetzen eines entsprechenden Vein-Signales mit x Bits, das die M-Graustufe auf der K-Graustufen-Skala repräsentiert, in das entsprechende Vaus-Signal mit y Bits in der zweiten Tabelle, das die M-Graustufe auf der N-Graustufen-Skala repräsentiert.

4. Ein Verfahren nach Anspruch 3, das ferner folgende Schritte umfaßt:
■ Liefern der Vein-Signale mit x Bits, die die M Graustufen auf der K-Graustufen-Skala repräsentieren, an ein Anzeigegerät, das K-Graustufen-Bilder darstellen kann, und zugleich Liefern der Vaus-Signale mit y Bits an ein Anzeigegerät, das N-Graustufen-Bilder darstellen kann.

5. Eine digitale Anzeigevorrichtung zur Übersetzung erster Bildsignale, die für ausgewählte M Graustufen auf einer K-Graustufen-Skala stehen, in zweite Bildsignale, die für M Stufen auf einer N-Graustufen-Skala stehen, wobei K > N ≧ M ist, so daß die zweiten Bildsignale in der Graustufenskala die relative Reihenfolge und Größe der Helligkeit der M Graustufen auf der K-Graustufen-Skala repräsentieren, um die Ausgabe der zweiten Bildsignale auf einem N-Graustufen-Anzeigegerät als Reaktion auf die Eingabe der ersten Bildsignale anzupassen, bestehend aus:
■ Mitteln zum Erstellen einer ersten Tabelle durch Zuordnen ausgewählter M Graustufen, jeweils repräsentiert durch erste Bildsignale mit x Bits, gemäß der relativen Reihenfolge und Größe ihrer Helligkeit auf einer K-Graustufen-Skala in andere M Graustufen, jeweils repräsentiert durch y Bits, die für indizierte Positionen auf einer N-Graustufen-Skala stehen, wobei K > N ≧ M und x > y ist;
wobei diese Mittel umfassen:
- Speichermittel, die eine Gruppe von Positionen mit Indizes aufweisen, zur Aufnahme von Werten, die in das erste Tabellenmittel eingetragen werden, um jeweils einzeln die M Graustufen auf der K-Graustufen-Skala auszuwählen;
- Mittel zum Durchführen einer "natürlichen Übersetzung" mit den x Bits durch Subtraktion der oberen y Bits der ersten ausgewählten Graustufe, um deren Graustufenwert Vj auf der N-Graustufen-Skala zu erhalten;
- Mittel zum Eintragen einer Markierung an der Position eines Index Vju in der ersten Tabelle unter Verwendung von Vju = Vj als Anfangswert in der ersten Tabelle, wenn keine Markierung an dieser Position eingetragen wurde;
- Mittel zum Setzen von Vju = Vju + 1, wenn eine Markierung an dieser Position eingetragen wurde, und zum Eintragen einer Markierung an der Position des letzteren Index Vju, sofern der letztere Index Vju < N ist;
- Mittel zum Eintragen einer Markierung an der Position eines Index Vjd unter Verwendung von Vjd = Vj - 1 als Anfangswert, sofern der letztere Index Vju ≧ N ist, wenn keine Markierung an der Position Vjd eingetragen wurde;
- und Mittel zum Setzen von Vjd = Vjd - 1, wenn eine Markierung an der Position Vjd eingetragen wurde, und Eintragen einer Markierung an der Position des letzteren Index Vjd; und
- Mittel zum Betätigen der obengenannten Mittel zum Durchführen einer "natürlichen Übersetzung" mit den x Bits jeder der anderen M Graustufen wie ausgewählt, um deren Graustufenwerte in der N-Graustufen-Skala zu erhalten, und zum Eintragen von Markierungen an den Positionen in der ersten Tabelle gemäß den Indizes, die von den obigen Mitteln ermittelt wurden;
■ Mitteln zum Erstellen einer zweiten Tabelle durch entsprechendes Zuordnen der verschiedenen M Graustufen auf der in der ersten Tabelle zugeordneten Graustufenskala zu den M Graustufen auf der K-Graustufen-Skala und Speichern der zweiten Tabelle;
■ Mitteln zum Eingeben erster Bildsignale in die gespeicherte zweite Tabelle;
■ Mitteln zum Nutzen der zweiten Tabelle zur Übersetzung eines ersten Eingabe-Bildsignals mit x Bits, das für eine M-Graustufe auf der K-Graustufen-Skala steht, in ein zweites Ausgabe-Bildsignal mit y Bits, das für die entsprechende M-Graustufe auf der N-Graustufen-Skala steht; und
■ Mitteln zum Liefern zweiter Bildsignale, die von der zweiten Tabelle ausgegeben werden, zur Ausgabe auf dem N-Graustufen-Anzeigegerät.

6. Eine Vorrichtung nach Anspruch 5, bei der das Mittel zum Erstellen der zweiten Tabelle umfaßt:
■ Mittel zum Auswählen jeweils einer der M Graustufen auf der K-Graustufen-Skala;
■ Mittel zum Feststellen, wo sich der Wert Vein der ausgewählten Graustufe in der aufsteigenden Reihenfolge der M Graustufenwerte auf der K-Graustufen-Skala befindet, und zum Feststellen seines Ranges J;
■ Mittel zum Bezeichnen des J-kleinsten Index der Indizes der Positionen mit Markierungen, die in die erste Tabelle eingetragen sind, als Vaus; und
■ Mittel zum Eintragen von Vaus in eine Position in der zweiten Tabelle entsprechend dem Vein-Wert.

7. Eine Vorrichtung nach Anspruch 6, bei der das Mittel zum Nutzen der zweiten Tabelle umfaßt:
■ Mittel zum Vergleichen des Wertes eines ersten Eingabesignals mit den Vein-Werten in der zweiten Tabelle und Übersetzen eines entsprechenden Vein-Signales mit x Bits, das die M-Graustufe auf der K-Graustufen-Skala repräsentiert, in das entsprechende Vaus-Signal mit y Bits in der zweiten Tabelle, das die M-Graustufe auf der N-Graustufen-Skala repräsentiert.

8. Eine Vorrichtung nach Anspruch 7, die ferner Mittel zum Liefern der Vein-Signale mit x Bits, die die M Graustufen auf der K-Graustufen-Skala repräsentieren, an ein Anzeigegerät umfaßt, das K-Graustufen-Bilder darstellen kann, während es die Vaus-Signale mit y Bits an ein Anzeigegerät liefert, das N-Graustufen-Bilder darstellen kann.

## Revendications

1. Procédé pour convertir des premiers signaux d'image indicatifs de M niveaux de gris sélectionnés sur une échelle à K gris, en second signaux d'image indicatifs de M niveaux sur une échelle à N gris, où K>N≧M, de sorte que les seconds signaux d'image sur l'échelle de gris représentent l'ordre et amplitude relatifs de la brillance des M niveaux de gris sur l'échelle à K gris pour prendre en compte la sortie des seconds signaux d'image sur un dispositif d'affichage d'échelle à N gris en réponse à l'entrée des premiers signaux d'image, comprenant les étapes consistant à :
. créer une première table en faisant correspondre les M niveaux de gris sélectionnés, chacun représenté par des premiers signaux d'image de x bits, en conformité avec l'ordre et l'amplitude relatifs de leur brillance sur une échelle à K gris, avec M niveaux de gris différents, chacun représenté par y bits indicatifs des positions indexées sur une échelle à N gris, où K>N≧M et x>y, dans lequel cette étape comprend les opérations consistant à :
- fournir un ensemble de positions avec des index qui doivent être utilisés pour ladite première table sélectionnant lesdits M niveaux de gris un par un sur l'échelle à K gris,
- effectuer une "conversion naturelle" sur les x bits, en soustrayant les y bits de poids fort du premier niveau de gris sélectionné pour obtenir sa valeur d'échelle de gris Vj sur l'échelle à N gris,
- entrer un contrôle à la position dans ladite première table d'un index Vju, utilisé Vju = Vj comme valeur initiale dans ladite première table si aucun contrôle n'a été entré dans ladite position, supposer Vju = Vju + 1 si un contrôle a été entré dans ladite position et si ledit dernier index Vju<N, si ledit dernier index Vju<N, entrer un contrôle à la position dudit dernier index et si Vju≧N, entrer un contrôle à la position d'un index Vjd, utiliser Vjd = Vj - 1 comme valeur initiale si aucun contrôle n'a été entré à ladite position Vjd, et si un contrôle a été entré à ladite position Vjd, poser Vjd = Vjd - 1 et entrer un contrôle dans la position dudit dernier index Vjd, et
- effectuer une "conversion naturelle" sur les x bits de chacun des autres M niveaux de gris comme sélectionné, pour obtenir leurs valeurs d'échelle de gris sur l'échelle à N gris et entrer des contrôles aux positions dans ladite première table conformément aux index déterminés dans les étapes ci-dessus,
. créer une seconde table en faisant correspondre lesdits M niveaux de gris différents sur ladite échelle de gris mise en correspondance dans ladite première table, en correspondance avec les M niveaux de gris sur ladite échelle à K gris et mémoriser ladite seconde table,
. entrer des premiers signaux d'image dans ladite seconde table mémorisée,
. utiliser ladite seconde table pour convertir un premier signal d'image d'entrée à x bits indicatif d'un niveau à M gris sur ladite échelle à K gris en un second signal d'image de sortie à y bits indicatif du niveau de M gris correspondant sur ladite échelle à N gris, et
. délivrer les second signaux d'image sortis par ladite seconde table pour sortir sur ledit dispositif à échelle à N gris.

2. Procédé selon la revendication 1, dans lequel l'étape consistant à créer ladite seconde table comprend des opérations consistant à :
. sélectionner lesdits M niveaux de gris un par un sur l'échelle à K gris,
. déterminer lorsque la valeur Ventrée des niveaux de gris sélectionnés est dans l'ordre ascendant des M valeurs de niveaux de gris sur l'échelle à K gris et déterminer son classement J,
. désigner le J^{ème} petit index des indices des positions avec des contrôles entrés ladite première table comme Vₛₒᵣₜᵢₑ, et
. entrer ladite valeur Vₛₒᵣₜᵢₑ à une position dans ladite seconde table correspondant à ladite valeur V_{entrée}.

3. Procédé selon la revendication 2, dans lequel l'étape consistant à utiliser ladite seconde table comprend les opérations consistant à :
. comparer la valeur d'un premier signal d'entrée aux valeurs V_{entrée} dans ladite seconde table et convertir un signal V_{entrée} à x bits concordant, représentant le niveau à M gris sur ladite échelle à K gris, en signal Vₛₒᵣₜᵢₑ à y bits correspondant dans ladite seconde table, représentant le niveau à M gris sur l'échelle à N gris.

4. Procédé selon la revendication 3 comprenant de plus les étapes consistant à :
. délivrer lesdits signaux V_{entrée} à x bits, représentant lesdits M niveaux de gris sur l'échelle à K gris, à un dispositif d'affichage capable d'afficher des images à échelle à K gris tout en délivrant lesdits signaux de sortie Vₛₒᵣₜᵢₑ à y bits à un dispositif d'affichage capable d'afficher des images à échelle à N gris.

5. Dispositif d'affichage numérique pour convertir des premiers signaux d'image, indicatifs des M niveaux de gris sélectionnés sur une échelle à K gris, en seconds signaux d'image indicatifs des M niveaux sur une échelle à N gris, où K>N≧M, de sorte que les seconds signaux d'image sur l'échelle de gris représentent l'ordre et l'amplitude relatifs de la brillance des M niveaux de gris sur l'échelle à K gris pour prendre en compte la sortie des seconds signaux d'image sur un dispositif d'affichage à échelle à N gris en réponse à l'entrée des premiers signaux d'image, comprenant :
. un moyen pour créer une première table en faisant correspondre les M niveaux de gris sélectionnés, chacun représenté par des premiers signaux d'image de x bits, en conformité avec l'ordre et l'amplitude relatifs de leur brillance sur une échelle à K gris avec des M niveaux de gris différents, chacun représenté par y bits indicatifs des positions indexées sur une échelle à N gris, où K>N≧M et x>y, dans lequel ces moyens comprennent :
- un moyen de mémoire ayant un ensemble de positions avec des index pour recevoir les valeurs qui doivent être entrées dans ledit premier moyen de table pour sélectionner lesdits M niveaux de gris un par un sur l'échelle à K gris,
- un moyen pour effectuer une "conversion naturelle" sur les x bits, en soustrayant les y bits de poids fort du premier niveau de gris sélectionné pour obtenir sa valeur d'échelle de gris Vj sur l'échelle à N gris,
- un moyen pour entrer un contrôle à la position dans ladite première table d'un index Vju, pour utiliser Vju = Vj comme valeur initiale dans ladite première table si aucun contrôle n'a été entré à ladite position.
- un moyen, si un contrôle a été entré à ladite position, posant Vju = Vju + 1 et si ledit dernier index Vju<N, pour entrer un contrôle à la position dudit dernier index Vju,
- un moyen, si ledit dernier index Vju≧N, pour entrer un contrôle à la position d'un index Vjd, et utiliser Vjd = Vj - 1 comme valeur initiale si aucun contrôle n'a été entré à ladite position Vjd,
- et un moyen si un contrôle a été entré à ladite position Vjd pour poser Vjd = Vjd - 1 et entrer un contrôle à la position dudit dernier index Vjd, et
- un moyen pour actionner ledit moyen précédent pour effectuer une "conversion naturelle" sur les x bits de chacun des autres M niveaux de gris comme sélectionné, pour obtenir leurs valeurs d'échelle de gris sur l'échelle à N gris et pour entrer les contrôles aux positions dans ladite première table conformément aux index comme déterminé par le moyen précédent,
. un moyen pour créer une seconde table en faisant correspondre lesdits M différents niveaux de gris sur l'échelle de gris mise en correspondance dans ladite première table, de manière correspondante aux M niveaux de gris sur l'échelle à K gris et pour mémoriser ladite seconde table,
. un moyen pour entrer les premiers signaux d'image dans ladite seconde table mémorisée,
. un moyen pour utiliser ladite seconde table afin de convertir un premier signal d'image d'entrée à x bits indicatif d'un des M niveaux de gris sur ladite échelle à K gris en un second signal d'image de sortie à y bits indicatif du niveau correspondant parmi les M niveaux de gris sur ladite échelle à N gris, et
. un moyen pour délivrer les seconds signaux d'image sortis par ladite seconde table pour sortie sur un dispositif d'affichage à échelle à N gris.

6. Dispositif selon la revendication 5, dans lequel le moyen pour créer ladite seconde table comprend :
. un moyen pour sélectionner lesdits M niveaux de gris un par un sur l'échelle à K gris,
. un moyen pour déterminer où la valeur V_{entrée} de niveau de gris sélectionné est dans l'ordre ascendant des M valeurs de niveaux de gris sur l'échelle à K gris et pour déterminer son classement J,
. un moyen pour désigner le J^{ème} plus petit index des indices des positions avec des contrôles entraînant ladite première table comme Vₛₒᵣₜᵢₑ, et
. un moyen pour entrer ladite valeur Vₛₒᵣₜᵢₑ à une position dans ladite seconde table correspondant à ladite valeur V_{entrée}.

7. Dispositif selon la revendication 6, dans lequel le moyen pour utiliser ladite seconde table comprend :
. un moyen pour comparer la valeur d'un premier signal d'entrée aux valeurs V_{entrée} dans ladite seconde table et pour convertir un signal V_{entrée} à x bits correspondant, représentant le niveau à M gris sur ladite échelle à K gris, au signal Vₛₒᵣₜᵢₑ à y bits correspondant dans ladite seconde table, représentant le niveau parmi les M niveaux de gris sur l'échelle à N gris.

8. Dispositif selon la revendication 7, comprenant de plus un moyen pour délivrer lesdits signaux V_{entrée} à x bits, représentant lesdits M niveaux de gris sur l'échelle à K gris, à un dispositif d'affichage pouvant afficher des images à échelle à K gris tout en délivrant lesdits signaux Vₛₒᵣₜᵢₑ à y bits à un dispositif d'affichage pouvant afficher des images à échelle à N gris.
